# EUROPÄISCHE PATENTSCHRIFT

(11) **EP 4 284 692 B1**
(45) Veröffentlichungstag und Bekanntmachung des Hinweises auf die Patenterteilung: **15.04.2026**
(21) Anmeldenummer: 22700950.3
(22) Anmeldetag: 18.01.2022
(51) Int. Cl.: B60W 40/09, B60W 50/14, B60W 50/16, B60W 50/10, B60W 40/08

(54) **SCHÄTZUNG EINES FAHRER-ABLENKUNGSGRADES**
ESTIMATING A DEGREE OF DRIVER DISTRACTION
ESTIMATION D'UN DEGRÉ DE DISTRACTION D'UN CONDUCTEUR

(30) Priorität: 01.02.2021 DE 102021200898
(43) Veröffentlichungstag der Anmeldung: 06.12.2023
(73) Patentinhaber: VOLKSWAGEN AKTIENGESELLSCHAFT, 38440 Wolfsburg (DE)
(72) Erfinder: BEHRENDT, Ramona, 38108 Braunschweig (DE); BROSIG, Arno, 38124 Braunschweig (DE); OBERST, Frank, 29410 Salzwedel (DE)
(86) Internationale Anmeldenummer: PCT/EP2022/050942
(87) Internationale Veröffentlichungsnummer: WO 2022/161810

(56) Entgegenhaltungen:
- WO-A1-2018/085804
- DE-A1- 102008 056 343
- DE-A1- 102018 216 511
- DE-T2- 60 115 693
- US-A1- 2018 299 890
- US-A1- 2020 122 734

## Beschreibung

Die Erfindung betrifft eine Vorrichtung zur Schätzung eines Ablenkungsgrades eines Fahrers bei einer Fahrt in einem Kraftfahrzeug sowie ein entsprechendes System, Verfahren und Computer-Programm.

Moderne Fahrzeuge bieten neben Bedienelementen zur primären Fahrzeugführung, wie Lenkrad, Pedalerie et cetera Bedienelemente für den Fahrer, die die Aufmerksamkeit des Fahrers vom Straßenverkehr ablenken können. Darunter fallen zum Beispiel ein InfotainmentSystem im Fahrzeug, Zusatzansichten in einem Kombiinstrument, wie Fahrdaten, Radioinformationen, FAS-Ansichten, Kombieinstellungen, et cetera. Durch eine Bedienung und Betrachtung dieser Elemente ist der Fahrer abgelenkt und kann sich nicht mehr komplett auf die Fahrzeugführung konzentrieren, was eine erhöhte Gefährdung für den Fahrer, die Insassen und/oder andere Verkehrsteilnehmer zur Folge hat.

Die Druckschrift US 2020 0 198 645 A1 betrifft ein Fahrerablenkung-Bestimmungssystem. Das Bestimmungssystem umfasst ein integriertes Erfassungs- und Computersystem, das Trägheitssensoren, interne Sensoren und externe Sensoren umfasst. Das Erfassungssystem tastet während einer Fahrt Daten von den Sensoren ab, um Lenkaktivitätsmetriken und Fahrerverhalten zu bestimmen. Eine Lenkaktivitätsmetrik ist eine Darstellung der Lenkeingaben des Fahrers während der Fahrt. Das Fahrerverhalten ist eine Darstellung, wie abgelenkt der Fahrer während der Fahrt ist. Durch Ausführen der oben genannten Schritte kann das System eine Analyse der Ablenkung des Fahrers bereitstellen und optional die Kontrolle über das Fahrzeug übernehmen, um abweichendes Verhalten zu vermeiden. Nachteilig ist hierbei, dass eine genaue Bestimmung der Ablenkung des Fahrers nicht möglich ist, da nur aufmerksamkeitssenkende Daten berücksichtigt werden.

Die Druckschrift US 10 246 014 B2 betrifft ein Verfahren zum Bestimmen der Ablenkung eines Fahrers eines Fahrzeugs, einschließlich Sensormessungen mittels eines Bordsystems des Fahrzeugs; Erzeugen einer Ausgabe, die einen abgelenkten Zustand anzeigt; Bestimmen, basierend auf der Ausgabe, dass der Fahrer des Fahrzeugs durch den abgelenkten Zustand gekennzeichnet ist; Erzeugen einer zweiten Ausgabe mittels eines zweiten Ablenkungserfassungsmoduls eines entfernten Computersystems, die anzeigt, dass der Fahrer durch den abgelenkten Zustand charakterisiert ist, basierend auf den Sensormessungen; Berechnen einer Ablenkungsbewertung an einem Bewertungsmodul des entfernten Computersystems in Reaktion auf das Erzeugen der zweiten Ausgabe und basierend auf den Sensormessungen und dem abgelenkten Zustand. Nachteilig ist hierbei, dass eine aufwendige Analyse zur Bestimmung einer Ablenkung des Fahrers durchgeführt wird, die auf einem entfernten Computersystem durchgeführt wird. Folglich wird eine stabile Datenverbindung zwischen dem entfernten Computersystem und dem Kraftfahrzeug benötigt. Das Verfahren kann daher nur bei vorhandener Datenverbindung zuverlässig durchgeführt werden. Die offenbarte Lehre ist folglich fehleranfällig, aufwendig und kostenintensiv.

Die Druckschrift US 10 752 261 B2 betrifft eine Steuervorrichtung für eine Fahrer-Ablenkungswarnung und ein Steuerverfahren für eine Fahrer-Ablenkungswarnung. Die Steuervorrichtung umfasst eine Sensorvorrichtung, die den Blick eines Fahrers erfasst, eine Einstellvorrichtung, die konfiguriert ist, um einen virtuellen Bereich vor dem Fahrer in mehrere Blickbereiche zu unterteilen und einen Schwellenwert für jeden der Blickbereiche festzulegen, eine Bestimmungsvorrichtung, die einen Betrachtungsbereich, der der Blickrichtung des Fahrers entspricht, aus den Blickbereichen bestimmt und eine Steuerungsvorrichtung, die eine Steuerung der Ablenkungswarnung des Fahrers basierend auf dem für den bestimmten Betrachtungsbereich eingestellten Schwellenwert durchführt. Nachteilig ist hierbei lediglich, dass eine Blockführung des Fahrers zur Bestimmung der Ablenkung des Fahrers verwendet wird. Eine genaue und zuverlässige Bestimmung der Ablenkung des Fahrers ist nicht möglich, da nur geringe Datenmengen berücksichtigt werden.

Die Druckschrift US 6 756 903 B2 betrifft ein System und Verfahren zum Bestimmen der Wachsamkeit eines Fahrers eines Kraftfahrzeugs, einschließlich Erfassen mindestens einer ersten Bewegungscharakteristik von mindestens einem ersten Teil eines Kraftfahrzeugs, Erfassen mindestens einer zweiten Bewegungscharakteristik von mindestens einem zweiten Teil des Kraftfahrzeugs, wobei mindestens eine zeitliche Beziehung zwischen der mindestens einen ersten Bewegungscharakteristik und der mindestens einen zweiten Bewegungscharakteristik verwendet wird, um vom Fahrer initiierte Bewegungen und nicht vom Fahrer initiierte Bewegungen zu erfassen und zu unterscheiden und die Wachsamkeit des Fahrers des Kraftfahrzeugs basierend auf mindestens einer Beziehung zwischen den vom Fahrer initiierten Bewegungen und den vom Nicht-Fahrer initiierten Bewegungen zu bestimmen. Eine genaue und zuverlässige Bestimmung der Ablenkung des Fahrers ist nicht möglich, da nur geringe Daten bezüglich eines Fahrzeugverhaltens berücksichtigt werden. Fahrerhandlungen, die keine Auswirkung auf das Fahrzeugverhalten haben, können einen Hinweis auf Ablenkung des Fahrers beinhalten. Das beschriebene Verfahren ist ungenau.

Die Druckschrift US 6 813 562 B2 betrifft einen Algorithmus zur Verwendung für ein vorausschauendes Kollisionswarnsystem, das in einem Fahrzeug verwendet wird. Das Kollisionswarnsystem umfasst ein Radargerät, das Streckendateien eines Abstands und einer Geschwindigkeit von Objekten auf dem Fahrzeugweg generiert. Das System umfasst ferner einen Kollisionswarnprozessor, der den Algorithmus ausführt, der die Streckendateien und verschiedene Eingabedaten empfängt, um zu bestimmen, ob und in welchem Ausmaß eine Warnung über eine mögliche Kollision ausgegeben werden soll. Die Eingabedaten umfassen die Geschwindigkeit und Beschleunigung des Fahrzeugs, ob die Bremsen des Fahrzeugs betätigt werden, die Empfindlichkeit für Kollisionswarnungen, Modifikatoren für die Ablenkung des Fahrers, Straßenzustandsdaten wie Wischergeschwindigkeit und Außenlufttemperatur und so weiter. Der Prozessor berechnet eine Alarmstufe basierend auf den verschiedenen Eingaben und gibt die Alarmstufe an eine Fahrerfahrzeugschnittstelle aus, um den Fahrer über die mögliche Kollision zu informieren. Nachteilig ist hierbei, dass der Fahrer nur vor einer drohenden Kollision gewarnt wird. Eine präventive Warnung des Fahrers aufgrund einer zu hohen Ablenkung wird nicht beschrieben. Mit dem System können keine anderen Folgen einer zu hohen Ablenkung eines Fahrers, wie ein Verlassen der Fahrbahn et cetera abgemildert und/oder verhindert werden.

Die Druckschrift DE 601 15 693 T2 beschreibt ein Verfahren zum Informieren eines Fahrzeugbedieners, um das Leistungsverhalten des Bedieners zu verbessern. Dabei wird ein innerer Abschnitt des Fahrzeuges überwacht sowie Bedieneraktivitätsdaten, die sich auf die Aktivitäten des Bedieners erhoben, und eine Cognitive-Load ("kognitive Last") des Bedieners durch Synthetisieren und Zusammenfassen von Fahrzeugbetriebsdaten, Bedieneraktivitätsdaten und Bedienerzustandsdaten abgeschätzt. Auf diese Weise wird der physische Zustand des Fahrers und das Ablenkungsniveau des Fahrers überwacht. Gegebenenfalls kann ein Alarm oder eine Warnung ausgegeben werden.

Die Druckschrift US 2020/ 122 734 A1 beschreibt eine Notsteuerungsvorrichtung für ein Fahrzeug. Die Notsteuervorrichtung umfasst einen Sensor, der so konfiguriert ist, dass er einen Bereich innerhalb oder außerhalb des Fahrzeugs misst, einen Prozessor, der so konfiguriert ist, dass er die von dem Sensor gesammelten Daten verarbeitet und einen Controller, der so konfiguriert ist, dass er das Fahrzeug steuert, indem er die von dem Prozessor verarbeiteten Daten widerspiegelt, wobei der Sensor erfasst, ob ein Fahrer unaufmerksam ist, der Prozessor den Grad der Unaufmerksamkeit des Fahrers entsprechend dem erfassten Zustand des Fahrers bestimmt und der Controller das Fahrzeug entsprechend dem Grad der Unaufmerksamkeit des Fahrers steuert.

Die Druckschrift DE 10 2018 216 511 A1 beschreibt ein Verfahren zur Schätzung der Aufmerksamkeit des Fahrers eines Fahrzeugs bei dem mit einer langfristigen Schätzung der Aufmerksamkeit des Fahrers ein erster Aufmerksamkeitswert ermittelt wird, wobei der erste Aufmerksamkeitswert mit zunehmender Fahrdauer des Fahrzeugs abnimmt. Eine Betätigung von Bedienelementen des Fahrzeugs durch den Fahrer wird erfasst. Basierend auf der erfassten Betätigung wird mit einer kurzfristigen Schätzung der Aufmerksamkeit des Fahrers ein zweiter Aufmerksamkeitswert ermittelt. In Abhängigkeit von dem ersten und/oder zweiten Aufmerksamkeitswert kann eine Meldung an den Fahrer ausgegeben oder eine Fahrzeugfunktion ausgelöst werden.

Der Erfindung liegt nun die Aufgabe zugrunde, eine verbesserte Möglichkeit zu schaffen, einen Ablenkungsgrad eines Fahrers zu ermitteln und vorzugsweise den Fahrer komfortabel zu warnen.

Gelöst wird diese Aufgabe durch eine Vorrichtung zur Schätzung eines Ablenkungsgrades eines Fahrers bei einer Fahrt in einem Kraftfahrzeug, mit:
- einer Eingangsschnittstelle zum Empfangen von Fahrerdaten umfassend Bediendaten und Sensordaten mit Informationen zu einem Verhalten des Fahrers während der Fahrt;
- einer Analyseeinheit zum Ermitteln eines variablen Ablenkungsgrades des Fahrers basierend auf den Fahrerdaten,
- einer Ausgangsschnittstelle zum Übermitteln eines Steuerbefehls an eine Ausgabeeinheit, der eine Ausgabe eines Hinweises an den Fahrer bewirkt, wenn die Analyseeinheit einen Ablenkungsgrad ermittelt, der größer ist als ein vordefinierter Schwellenwert, um den Fahrer auf einen erhöhten Ablenkungsgrad hinzuweisen, wobei der Ablenkungsgrad durch einen Index repräsentiert ist, der einen aktuellen Aufmerksamkeitszustand des Fahrers angibt und einen neutralen Aufmerksamkeitsgrad als Referenzwert aufweist, wobei der Index sowohl Werte annehmen kann, die eine höhere Aufmerksamkeit als den neutralen Aufmerksamkeitsgrad als auch Werte, die eine niedrigere Aufmerksamkeit als den neutralen Aufmerksamkeitsgrad anzeigen, wobei die Analyseeinheit dazu ausgebildet ist, basierend auf einem vordefinierten Verhalten des Fahrers während der Fahrt eine Zunahme und basierend auf einem vordefinierten Verhalten des Fahrers während der Fahrt eine Abnahme des Ablenkungsgrades zu ermitteln und den Index entsprechend anzupassen, und wobei die Analyseeinheit dazu ausgebildet ist, den Index gemäß einem Gradienten stetig zu dem neutralen Aufmerksamkeitsgrad abzubauen, wenn über eine parametrisierbare Zeit kein vordefiniertes Verhalten des Fahrers erkannt wird, das eine Zunahme oder eine Abnahme des Ablenkungsgrades des Fahrers anzeigt.

Die obige Aufgabe wird ferner gelöst durch ein System zur Schätzung eines Ablenkungsgrades eines Fahrers bei einer Fahrt in einem Kraftfahrzeug, mit:
einer Vorrichtung wie zuvor beschrieben; und
einer Ausgabeeinheit zum Ausgeben eines Hinweises an den Fahrer, wenn die Analyseeinheit einen Ablenkungsgrad ermittelt, der größer ist als ein vordefinierter Schwellenwert, um den Fahrer auf einen erhöhten Ablenkungsgrad hinzuweisen.

Schließlich wird die obige Aufgabe gelöst durch ein Verfahren zur Schätzung eines Ablenkungsgrades eines Fahrers bei einer Fahrt in einem Kraftfahrzeug, vorzugsweise mittels einer Vorrichtung und/oder einem System wie zuvor beschrieben, umfassend die Schritte:
Empfangen von Fahrerdaten umfassend Bediendaten und Sensordaten mit Informationen zu einem Verhalten des Fahrers während der Fahrt;
Ermitteln eines Ablenkungsgrades des Fahrers basierend auf den Fahrerdaten, Übermitteln eines Steuerbefehls an eine Ausgabeeinheit, der eine Ausgabe eines Hinweises an den Fahrer bewirkt, wenn ein ermittelter Ablenkungsgrad größer ist als ein vordefinierter Schwellenwert, um den Fahrer auf einen erhöhten Ablenkungsgrad hinzuweisen, wobei der Ablenkungsgrad durch einen Index repräsentiert wird, der einen aktuellen Aufmerksamkeitszustand des Fahrers angibt und einen neutralen Aufmerksamkeitsgrad als Referenzwert aufweist, wobei der Index sowohl Werte annehmen kann, die eine höhere Aufmerksamkeit als den neutralen Aufmerksamkeitsgrad, als auch Werte, die eine niedrigere Aufmerksamkeit als den neutralen Aufmerksamkeitsgrad anzeigen; wobei basierend auf einem vordefinierten Verhalten des Fahrers während der Fahrt eine Zunahme und basierend auf einem vordefinierten Verhalten des Fahrers während der Fahrt eine Abnahme des Ablenkungsgrades ermittelt und der Index entsprechend angepasst wird, und der Index gemäß einem Gradienten stetig zu dem neutralen Aufmerksamkeitsgrad abgebaut wird, wenn über eine parametrisierbare Zeit kein vordefiniertes Verhalten des Fahrers erkannt wird, das eine Zunahme oder eine Abnahme des Ablenkungsgrades des Fahrers anzeigt.

Durch eine Eingangsschnittstelle kann eine kosteneffiziente Vorrichtung geschaffen werden, die vorzugsweise mit vorhandenen, im Kraftfahrzeug verbauten Sensoren und Einheiten verwendet werden kann. Eine Eingangsschnittstelle kann dabei kabelgebunden und/oder drahtlos ausgebildet sein und vorzugsweise ein oder mehrere Kommunikationsprotokolle unterstützen. Durch eine Analyseeinheit kann eine Ablenkung des Fahrers zuverlässig erkannt werden. Dadurch, dass basierend auf einem vordefinierten Verhalten des Fahrers während der Fahrt eine Zunahme und/oder Abnahme des Ablenkungsgrades ermittelbar ist, kann ein unnötiges Warnen des Fahrers verhindert werden. Eine exaktere Feststellung der Ablenkung des Fahrers ist möglich. Dadurch kann die Anzahl von ausgegebenen Warnungen reduziert werden, sodass der Fahrer die Warnungen ernst nimmt. Einer Abstumpfung des Fahrers aufgrund zu vieler Warnungen kann entgegengewirkt werden. Die Sicherheit im Straßenverkehr wird erhöht. Eine Ausgangsschnittstelle ermöglicht eine kosteneffiziente Vorrichtung, die vorzugsweise mit vorhandenen Ausgabegeräten verwendet werden kann.

In bevorzugter Ausgestaltung der Erfindung ist vorgesehen, dass die Bediendaten Informationen bezüglich einem Aktivieren einer Bedienvorrichtung im Bereich eines Fahrerarbeitsplatzes, insbesondere einer Bedieneinheit eines Mitteldisplays und/oder einer Mittelkonsole, einer Bedieneinheit eines Multifunktionslenkrads, einer Bedieneinheit zum Spiegelverstellen, einer Bedieneinheit zum Sitzverstellen, einer Bedieneinheit eines elektrischen Fensterhebers, einer Bedieneinheit zur Verstellung des Innenraumlichtes und/oder einer Bedieneinheit zur Verstellung des Dachfensters umfassen. Durch das Erfassen einer Aktivierung einer Bedienvorrichtung kann technisch einfach festgestellt werden, dass der Fahrer sich nicht mit einer Vorrichtung zur primären Fahrzeugführung beschäftigt und demnach der Fahrzeugführung zumindest zweitweise eine geringere Aufmerksamkeit des Fahrers zukommt. Ein Erfassen kann dabei durch einen Sensor erfolgen. Ferner kann ein durch die Bedienvorrichtung generierter Steuerbefehl durch die Eingangsschnittstelle der Vorrichtung empfangen werden. Beispielsweise wird durch eine Bedieneinheit zum Spiegelverstellen ein Signal beziehungsweise Steuerbefehl an eine Einheit zum Spiegelverstellen übermittelt. Dieser Steuerbefehl kann von der Eingangsschnittstelle empfangen werden.

In weiterer bevorzugter Ausgestaltung der Erfindung ist vorgesehen, dass die Bediendaten Informationen bezüglich einem Bedienen von Vorrichtungen zur primären Fahrzeugführung, insbesondere einer Pedalerie und/oder einer Lenkradstellung umfassen; und/oder die Sensordaten Informationen zu einem Fahrverhalten des Kraftfahrzeugs, insbesondere einem Beschleunigungsverhalten des Kraftfahrzeugs, und/oder Informationen bezüglich des Fahrers, insbesondere eine Fahrerbeobachtung durch eine Kamera, umfassen. Anhand der Informationen bezüglich Vorrichtungen zur primären Fahrzeugführung kann zuverlässig eine Güte des Fahrzugführens ermittelt werden. Beispielsweise kann eine starke Änderung des Lenkeinschlags oder ein starkes Beschleunigen oder Verzögern des Kraftfahrzeugs auf eine aktive gewollte Steuerung des Kraftfahrzeugs durch den Fahrer hinweisen und auf eine hohe Aufmerksamkeit beziehungsweise eine geringe Ablenkung des Fahrers schließen lassen. Insbesondere ist von einem Beschleunigungsverhalten eine positive Beschleunigung und eine negative Beschleunigung also ein Verzögerungsverhalten umfasst.

In weiterer bevorzugter Ausgestaltung der Erfindung ist vorgesehen, dass die Analyseeinheit dazu ausgebildet ist, basierend auf einer Datenfusion der Bediendaten und Sensordaten, einen Warnzeitpunkt zu ermitteln, wobei der Steuerbefehl eine Ausgabe des Hinweises an den Fahrer zum Warnzeitpunkt bewirkt. Durch eine Datenfusion kann eine verbesserte Bestimmung eines Warnzeitpunkts erfolgen. Insbesondere können Fehl-Warnmeldungen vermieden werden. Zudem können hierdurch technisch einfach sowohl aufmerksamkeitssteigernde als auch aufmerksamkeitssenkende Handlungen der Fahrers berücksichtigt werden.

In weiterer bevorzugter Ausgestaltung der Erfindung ist vorgesehen, dass die Analyseeinheit dazu ausgebildet ist, einer Bedieneingabe und/oder Fahrerhandlung des Fahrers eine, vorzugsweise gewichtete, erwartete Fahrerablenkung zuzuordnen, wobei insbesondere die Analyseeinheit dazu ausgebildet ist, jeder Fahrerablenkung parametrisierbar ein Aufmerksamkeitspotential zuzuordnen, um eine Auswirkung der Fahrerablenkung auf den Ablenkungsgrad des Fahrers zu bestimmen. Hierdurch kann eine Genauigkeit und Feinfühligkeit der Vorrichtung verbessert werden. Eine Aufmerksamkeit der Fahrers kann durch die Zuordnung eines parametrisierbaren Aufmerksamkeitspotentials modelliert werden. Durch eine Gewichtung der erwarteten Fahrerablenkung kann eine fahrerspezifische individuelle Abschätzung der Fahrerablenkung erfolgen.

In weiterer bevorzugter Ausgestaltung der Erfindung ist vorgesehen, dass die Analyseeinheit dazu ausgebildet ist, einer Fahrerablenkung eine zeitliche Dauer zuzuordnen, die der Ablenkungsdauer des Fahrers durch und/oder in Folge der Bedieneingabe und/oder Fahrerhandlung entspricht. Hierdurch kann die Abschätzung der Fahrerablenkung weiter verbessert werden. Insbesondere kann erreicht werden, dass eine Fahrerablenkung durch eine Bedieneingabe und/oder Fahrerhandlung für die komplette Ablenkungszeit berücksichtigt wird und nicht nur für den Zeitpunkt des Bedienens. Ferner kann nach der Ablenkungsdauer die geschätzte Fahrerablenkung auf einen Normalwert zurückkehren. Beispielsweise kann dabei die Zeit berücksichtigt werden, in der ein Fahrer seine Aufmerksamkeit auf ein Infotainmentsystem richtet, um beispielsweise die angezeigten Informationen wie Außentemperatur, Reichweite et cetera zu lesen und zu erfassen, wobei anschließend wieder von einer normalen Fahrerablenkung/Fahreraufmerksamkeit ausgegangen werden kann.

In weiterer bevorzugter Ausgestaltung der Erfindung ist vorgesehen, dass die Analyseeinheit dazu ausgebildet ist, einer Mehrzahl von gleichbleibenden Bedieneingaben und/oder Fahrerhandlungen innerhalb einer vordefinierten Totzeit die erwartete Fahrerablenkung einer einzigen Bedieneingabe und/oder Fahrerhandlung zuzuordnen. Hierdurch kann die Abschätzung einer Fahrerablenkung weiter verfeinert werden. Es hat sich gezeigt, dass ein Fahrer durch mehrere, insbesondere gleichartige, Bedieneingaben und/oder Fahrerhandlungen hintereinander nicht stärker abgelenkt ist, sondern länger abgelenkt ist.

Weitere bevorzugte Ausgestaltungen der Erfindung ergeben sich aus den übrigen, in den Unteransprüchen genannten Merkmalen.

Bevorzugt kann eine Abschätzung einer Fahreraufmerksamkeit durch ein Verfahren wie folgt erreicht werden: Durch eine Bedieneingabe des Fahrers erkennt das Verfahren ein Event, welches anschließend in Bezug auf die erwartete Fahrerablenkung gewichtet wird. Jedem Event kann parametrisierbar ein Aufmerksamkeitspotential, beispielsweise im Bereich von sehr aufmerksamkeitsweisend über neutral bis sehr ablenkend, zugeordnet werden. Zusätzlich wird eine zeitliche Dauer beziehungsweise Haltezeit bestimmt, die der erwarteten Ablenkungsdauer des spezifischen Events des Fahrers entspricht. Sollte der Fahrer mehrere gleichbleibende Bedieneingaben in kurzer Zeit nacheinander machen, werden diese innerhalb einer definierten Zeitspanne beziehungsweise Totzeit herausgefiltert, da angenommen wird, dass der Fahrer dadurch nicht stärker sondern nur länger abgelenkt ist. Aus den Events wird ein Index ermittelt. Der Index kann steigen, was bedeutet, dass der Fahrer aktuell zunehmend abgelenkt ist und der Index kann durch definierte Bedienhandlungen sinken, beispielsweise ein starkes Beschleunigen/ Bremsen, starkes Lenken, wodurch erkannt wird, dass der Fahrer wieder aufmerksam für die Fahrzeugführung ist. Werden über eine parametrisierbare Zeit keine weiteren Events erkannt, baut sich der Index auf einen Neutralwert ab. Überschreitet der Index eine vordefinierte Schwelle, gibt das Verfahren eine Ablenkungsmeldung aus.

Der Fahrerarbeitsplatz ist insbesondere der Fahrersitz und eine Umgebung des Fahrersitzes mit Bedienelementen, die ein Fahrer während der Fahrt bedienen kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische vereinfachte Darstellung einer erfindungsgemäßen Vorrichtung;
- Figur 2: eine schematische vereinfachte Darstellung eines erfindungsgemäßen Systems;
- Figur 3: eine schematische Darstellung einer Situation in einem Kraftfahrzeug;
- Figur 4: eine schematische Darstellung eines Fahrerarbeitsplatzes;
- Figur 5: schematische Schaubilder der Bestimmung eines Ablenkungsgrades eines Fahrers; und
- Figur 6: schematisch die Verfahrensschritte eines erfindungsgemäßen Verfahrens.

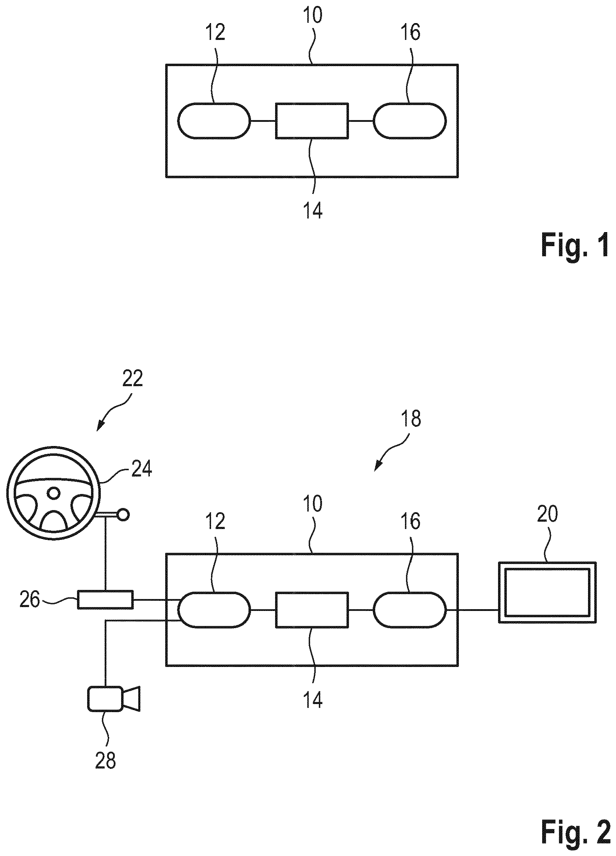

Figur 1 zeigt eine erfindungsgemäße Vorrichtung 10 zur Schätzung eines Ablenkungsgrades eines Fahrers bei einer Fahrt in einem Kraftfahrzeug mit einer Eingangsschnittstelle 12, einer Analyseeinheit 14 und einer Ausgangsschnittstelle 16. Es versteht sich, dass die Eingangsschnittstelle 12 und die Ausgangsschnittstelle 16 auch gemeinsam nach der Art eines Transceivers ausgebildet sein können. Die hier gewählte getrennte Darstellung dient der besseren Übersicht.

Die Eingangsschnittstelle 12 ist dazu ausgebildet, von Fahrerdaten umfassend Bediendaten und Sensordaten mit Informationen zu einem Verhalten des Fahrers während der Fahrt zu empfangen.

Vorzugsweise können die Bediendaten Informationen bezüglich einem Aktivieren einer Bedienvorrichtung im Bereich eines Fahrerarbeitsplatzes, insbesondere einer Bedieneinheit eines Mitteldisplays und/oder einer Mittelkonsole, einer Bedieneinheit eines Multifunktionslenkrads, einer Bedieneinheit zum Spiegelverstellen, einer Bedieneinheit zum Sitzverstellen, einer Bedieneinheit eines elektrischen Fensterhebers, einer Bedieneinheit zur Verstellung des Innenraumlichtes einer Bedieneinheit zur Verstellung des Dachfensters, Informationen bezüglich Vorrichtungen zur primären Fahrzeugführung, insbesondere einer Pedalerie und/oder einer Lenkradstellung, umfassen. Die Sensordaten können bevorzugt Informationen zu einem Fahrverhalten des Kraftfahrzeugs, insbesondere einem Beschleunigungsverhalten des Kraftfahrzeugs, und/oder Informationen bezüglich des Fahrers, insbesondere eine Fahrerbeobachtung durch eine Kamera, umfassen.

Die Analyseeinheit 14 ist dazu ausgebildet, einen variablen Ablenkungsgrad des Fahrers basierend auf den Fahrerdaten zu ermitteln. Die Analyseeinheit 14 kann beispielsweise ein Schaltkreis, eine Schaltlogik oder eine Einheit der Bordelektronik eines Kraftfahrzeugs sein. Beispielsweise kann basierend auf einem vordefinierten Verhalten des Fahrers während der Fahrt eine Zunahme und/oder Abnahme des Ablenkungsgrades ermittelt werden.

Die Ausgangsschnittstelle 16 ist dazu ausgebildet, einen Steuerbefehl an eine Ausgabeeinheit zu übermitteln, der eine Ausgabe eines Hinweises an den Fahrer bewirkt, wenn die Analyseeinheit 14 einen Ablenkungsgrad ermittelt, der größer ist als ein vordefinierter Schwellenwert, um den Fahrer auf einen erhöhten Ablenkungsgrad hinzuweisen.

Figur 2 zeigt ein System 18 zur Schätzung eines Ablenkungsgrades eines Fahrers bei einer Fahrt mit einer Vorrichtung 10 und einer Ausgabeeinheit 20. Das System 18 umfasst ferner Vorrichtungen zur primären Fahrzeugführung 22, wie beispielsweise ein Lenkrad 24. Ferner kann das System 18 auch einen Lenkwinkelsensor 26 umfassen. Weiterhin umfasst das System 18 einen Sensor in Form einer Kamera 28, die vorzugsweise auf einen Fahrer des Kraftfahrzeugs gerichtet ist, um Bewegungen und/oder eine Mimik et cetera des Fahrers zu erfassen. Es versteht sich, dass die Kamera 28 auch ein Mikrofon umfassen kann, um Geräusche im Kraftfahrzeuginnenraum zu erfassen.

Die Ausgabeeinheit 20 kann beispielsweise ein Display eines Kombiinstruments, ein Vibrationsmodul im Sitz und/oder im Lenkrad 24, ein Lautsprecher und/oder eine Warnleuchte sein. Ferner kann die Ausgabeeinheit 20 einen reversiblen Gurtstraffer für einen Gurtruck und/oder eine Bremsvorrichtung für einen Bremsruck umfassen. Es versteht sich, dass die Vorrichtung 10 auch um eine entsprechende Ausgabeeinheit 20 erweitert werden kann.

Mittels des Systems 18 kann ein Ablenkungsgrad des Fahrers, wie oben beschrieben, ermittelt werden und der Fahrer gewarnt werden, wenn sein Ablenkungsgrad einen vordefinierten Schwellenwert überschreitet. Es versteht sich, dass eine Ausführungsform denkbar ist, in der der Fahrer den Schwellenwert, ab der eine Warnung ausgegeben werden soll, selbst bestimmen beziehungsweise selbst beeinflussen kann. Der Fahrer kann beispielsweise die Sensitivität des Systems 18 im Infotainmentsystem einstellen und damit den Schwellwert zur Ausgabe einer Warnung beeinflussen. Insbesondere ist es denkbar, dass der Fahrer zwischen drei Sensitivitätswerten wählen kann und somit das System 18 an sich anpassen kann. Ferner ist es denkbar, dass der Fahrer die Art der Warnung selbst bestimmen kann, also ob akustisch gewarnt wird, optisch gewarnt wird, in Form einer Ausgabe auf einem Kombiinstrument oder durch Aufleuchten eines Leuchtmittels oder ob haptisch gewarnt wird, beispielsweise durch Vibrieren des Lenkrads 24 oder eines Fahrersitzes. Es versteht sich ferner, dass das System 18 auch durch ein Smartphone verwirklicht werden kann, wobei das Smartphone mit dem Kraftfahrzeug verbunden ist und dazu ausgebildet ist, die Fahrerdaten zu empfangen und/oder zumindest teilweise mittels einer Sensorik des Smartphones zu erfassen.

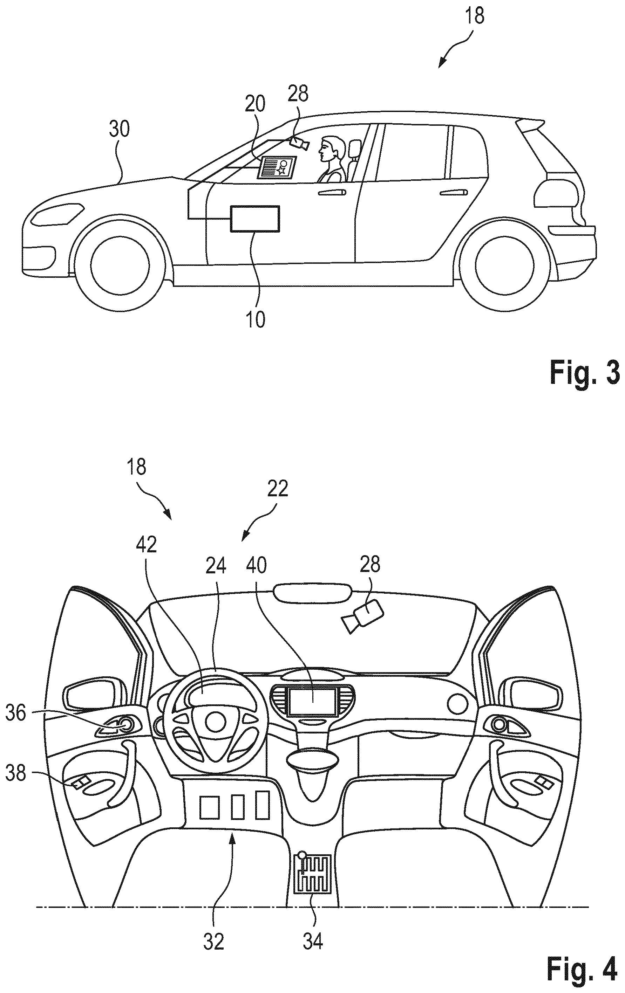

In Figur 3 ist schematisch eine Situation in einem Kraftfahrzeug 30 gezeigt, wobei das Kraftfahrzeug 30 ein System 18 wie zuvor beschrieben umfasst. In dem gezeigten Beispiel kann ein Fahrer mittels der Kamera 28 während einer Fahrt beobachtet werden, wobei ein Fahrerverhalten durch das System 18 ausgewertet wird und bei Bedarf eine Warnung mittels der Ausgabeeinheit 20 in Form eines Displays ausgegeben werden kann.

Beispielsweise können Bedieneingaben des Fahrers durch die Kamera 28 erfasst werden. Es versteht sich, dass auch eine Augenbewegung insbesondere eine Blickführung des Fahrers erfasst werden kann, wobei eine Blickrichtung zu einem Bedienelement und/oder einem Display auf einen erhöhten Ablenkungsgrad des Fahrers schließen lässt und eine Blickrichtung durch die Frontscheibe auf eine erhöhte Aufmerksamkeit des Fahrers schließen lässt.

In Figur 4 ist schematisch ein Fahrerarbeitsplatz in einem Kraftfahrzeug 30 mit einem System 18 gezeigt. Der Fahrerarbeitsplatz umfasst Vorrichtungen zur primären Fahrzeugführung 22, wie beispielsweise ein Lenkrad 24, eine Pedalerie 32, eine Schalteinheit 34. Der Fahrerarbeitsplatz umfasst ferner Bedienvorrichtungen, wie beispielsweise eine Bedieneinheit zum Spiegelverstellen 36, eine Bedieneinheit für einen elektrischen Fensterheber 38, eine Bedieneinheit eines Mitteldisplays 40, insbesondere in Form eines Touchdisplays und eine Bedieneinheit eines Kombiinstruments 42. Vorzugsweise ist das Kombiinstrument 42 mittels eines Multifunktionslenkrads bedient, das darüber hinaus noch weitere Bedienelemente umfassen kann. Ferner weist der Fahrerarbeitsplatz, nicht aus Gründen der Übersicht, eine näher bezeichnete Bedieneinheit des Multifunktionslenkrads, eine Bedieneinheit der Klimatisierung sowie eine Bedieneinheit zum Sitzverstellen auf. Es versteht sich, dass der Fahrerarbeitsplatz weitere Bedieneinheiten umfassen kann und vorliegend nur eine exemplarische Auswahl aufgezeigt wurde, um die Erfindung zu beschreiben.

Anhand der Betätigung verschiedener Vorrichtungen kann eine Aufmerksamkeit des Fahrers bei der Fahrt ermittelt werden. Beispielsweise kann bei einer Betätigung von Vorrichtungen zur primären Fahrzeugführung 22 das System 18 eine erhöhte Aufmerksamkeit des Fahrers ermitteln und vorzugsweise keine Warnung ausgeben. Aus einer Betätigung einer Bedienvorrichtung, die nicht zur primären Fahrzeugführung dient, kann auf eine verringerte Aufmerksamkeit des Fahrers geschlossen werden. Unterschreitet die Aufmerksamkeit des Fahrers einen vordefinierten Schwellenwert, also ist der Ablenkungsgrad der Fahrers höher als ein vordefinierter Schwellenwert, kann eine Warnung an den Fahrer ausgegeben werden, um dessen Aufmerksamkeit zu erhöhen.

Es versteht sich, dass die Aufmerksamkeit des Fahrers als gegenläufig zu einem Ablenkungsgrad des Fahrers zu verstehen ist. Im Rahmen der vorliegenden Anmeldung entspricht folglich eine hohe Aufmerksamkeit einem geringen Ablenkungsgrad des Fahrers und umgekehrt.

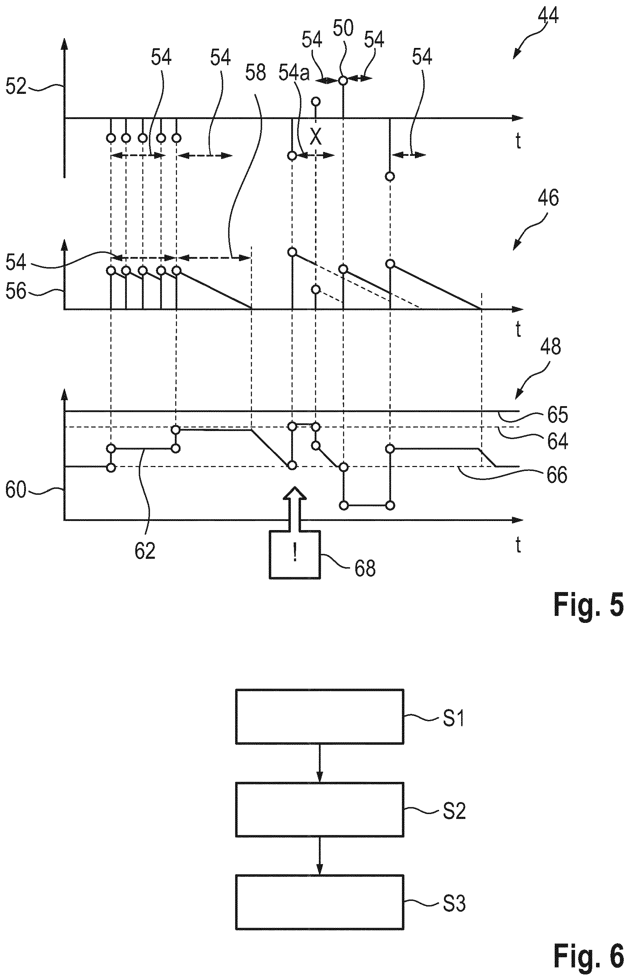

Figur 5 zeigt schematische Schaubilder 44, 46, 48 zu einer Bestimmung eines Ablenkungsgrades eines Fahrers. In den Schaubildern 44, 46, 48 ist auf einer X-Achse eine Zeit aufgetragen. Die Zeitachse ist für die Schaubilder 44, 46, 48 gleich, wobei zur besseren Vergleichbarkeit der Schaubilder 44, 46, 48 gleiche notorische Zeitpunkte durch senkrechte gestrichelte Linien hervorgehoben sind. Einzelne Datenpunkte sind durch Kreise 50 verdeutlicht. Es versteht sich, dass das bezüglich der Schaubilder 44, 46, 48 beschriebene Vorgehen mittels einer Vorrichtung 10 wie oben beschrieben, durchgeführt werden kann.

Im oberen Schaubild 44 sind auf der Y-Achse 52 Bedieneingaben und/oder Fahrerhandlungen aufgetragen, wobei aufmerksamkeitssteigernde Bedieneingaben und/oder Fahrerhandlungen oberhalb der X-Achse aufgetragen sind und aufmerksamkeitssenkende Bedieneingaben und/oder Fahrerhandlungen unterhalb der X-Achse aufgetragen sind. Ein Abstand zur X-Achse verdeutlicht eine Ausprägung, wie stark die Bedieneingaben und/oder Fahrerhandlungen Einfluss auf eine Aufmerksamkeit beziehungsweise Ablenkung des Fahrers haben, also eine erwartete Fahrerablenkung. Als Doppelpfeil ist eine Totzeit 54 aufgetragen, wobei gleichartige Bedieneingaben und/oder Fahrerhandlungen innerhalb der Totzeit 54 keinen zusätzlichen Einfluss auf die Ermittlung des Ablenkungsgrades des Fahrers haben. Es versteht sich, dass verschiedenen Bedieneingaben und/oder Fahrerhandlungen unterschiedliche Totzeiten 54 zugeordnet werden können.

Im mittleren Schaubild 46 sind auf der Y-Achse 56 Haltezeiten 58 aufgetragen. Die Haltezeiten 58 sind vorzugsweise immer positiv. Als Haltezeit 58 ist die Zeitspanne zu verstehen, in der einer Bedieneingabe und/oder Fahrerhandlung eine Auswirkung auf einen Ablenkungsgrad des Fahrers zugeordnet wird. Verdeutlich ist ein Abklingen der Haltezeit 58 durch Linien, die schräg zur X-Achse hin verlaufen. Es versteht sich, dass eine entsprechende Steigung der Linien beziehungsweise Dauer der Haltezeit 58 individuell einzelnen Bedieneingaben und/oder Fahrerhandlungen zugeordnet werden kann. In einer Vereinfachung kann auch für jede der Bedieneingaben und/oder Fahrerhandlungen eine gleiche Haltezeit 58 angenommen werden.

Im unteren Schaubild 48 ist auf der Y-Achse 60 der ermittelte Ablenkungsgrad 62 des Fahrers aufgetragen, der beispielsweise basierend auf einem parametrisierbaren Aufmerksamkeitspotential einer Bedieneingabe und/oder Fahrerhandlung ermittelbar ist. Ein Schwellenwert 64 für einen zu geringen Aufmerksamkeitsgrad ist als waagrechte gestrichelte Linie aufgetragen. Eine Maximalwert 65 für eine Fahrerablenkung ist als durchgezogene Linie dargestellt. Ein Ablenkungsgrad des Fahrers kann vorzugsweise nicht größer werden als der Maximalwert 65. Der Schwellenwert 64 für eine Meldung liegt vorzugsweise unterhalb der Maximalbegrenzung also des Maximalwertes 65. Ein neutraler Aufmerksamkeitsgrad ist als waagrechte gestrichelte Linie aufgetragen und mit 66 bezeichnet. Steigt der Ablenkungsgrad 62 des Fahrers über den Schwellenwert 64 wird ein Hinweis 68 an den Fahrer ausgegeben.

Das Aufmerksamkeitspotential ist vorzugsweise ein Maß dafür, wie stark sich eine Bedieneingabe und/oder Fahrerhandlung auf den Ablenkungsgrad 62 des Fahrers auswirkt. Die erwartete Fahrerablenkung ist vorzugsweise ein Maß dafür, wie stark sich eine Bedieneingabe und/oder Fahrerhandlung auf die Haltezeit 58 auswirkt.

In den Schaubildern 44, 46, 48 ist von links nach recht zu erkennen, dass durch mehrere aufmerksamkeitssenkende Bedieneingaben und/oder Fahrerhandlungen der Ablenkungsgrad 62 des Fahrers steigt, wobei die ersten vier Bedieneingaben und/oder Fahrerhandlungen innerhalb der Totzeit 54 durchgeführt wurden. Daher hat sich der ermittelte Ablenkungsgrad 62 nur bezüglich der ersten der vier Bedieneingaben und/oder Fahrerhandlungen erhöht. Eine fünfte Bedieneingabe und/oder Fahrerhandlung erfolgte außerhalt der Totzeit 54 und hat ein weitere Erhöhung des Ablenkungsgrads 62 zu Folge. Nach Ablauf der Haltezeit 58 kehrt der Ablenkungsgrad 62 stetig zu einem neutralen Aufmerksamkeitsgrad 66 zurück.

Durch eine erneute stärker aufmerksamkeitssenkende Bedieneingabe und/oder Fahrerhandlung überschreitet der Ablenkungsgrad 62 den Schwellenwert 64 und der Hinweis 68 wird an den Fahrer ausgegeben. Hierdurch wird der Fahrer zu einer aufmerksamkeitssteigernden Bedieneingabe und/oder Fahrerhandlung angeregt, im Schaubild 44 ist das durch ein "X" markiert. Da es sich nicht um eine gleichartige Bedieneingabe und/oder Fahrerhandlung handelt, hat die Totzeit 54a keine Auswirkung und die aufmerksamkeitssteigernde Bedieneingabe und/oder Fahrerhandlung wird berücksichtigt.

Insbesondere wird bei der mit "X" markieren Stelle vorzugsweise die Haltezeit 58 ignoriert. Dadurch, dass zuvor ein abgelenkter Fahrer festgestellt wurde und dieser eine aufmerksamkeitssteigernde Fahrerhandlung vorgenommen hat und sich der Ablenkungsgrad auch nach der Fahrerhandlung im abgelenkten Bereich befindet, kann ein Ablenkungsgrad des Fahrers nicht mehr eindeutig bestimmt werden. Der Index wird gemäß einem Gradienten stetig zu einem neutralen Aufmerksamkeitsgrad 66 abgebaut. Dieses Vorgehen wird ebenfalls angewandt, wenn der Fahrer zuvor aufmerksam war, eine ablenkende Bedienhandlung vornimmt und der Ablenkungsgrad noch immer einen aufmerksamen Fahrer angibt. Wechselt der Ablenkungsgrad jedoch den Bereich, ist der Ablenkungsgrad des Fahrers vorzugsweise eindeutig bestimmbar und die Haltezeit kann ausgewertet werden.

Eine weitere aufmerksamkeitssteigernde Bedieneingabe und/oder Fahrerhandlung führt dazu, dass der ermittelte Ablenkungsgrad 62 weiter herabgesetzt wird, also eine erhöhte Aufmerksamkeit des Fahrers ermittelt wurde. Durch den herabgesetzten Ablenkungsgrad 62 reicht die letzte, stark aufmerksamkeitssenkende Bedieneingabe und/oder Fahrerhandlung nicht aus, um erneut den Schwellenwert 64 zu überqueren und die Ausgabe eines Hinweises 68 an den Fahrer auszulösen. Da keine weiteren Bedieneingaben und/oder Fahrerhandlungen erfolgen, kehrt der Ablenkungsgrad 62 nach abklingen der Haltezeit 58 wieder stetig zu einem neutralen Aufmerksamkeitsgrad 66 zurück.

In Figur 6 sind schematisch die Schritte eines erfindungsgemäßen Verfahrens zur Schätzung eines Ablenkungsgrades 62 eines Fahrers bei einer Fahrt in einem Kraftfahrzeug 30, vorzugsweise mittels einer Vorrichtung 10, wie oben beschrieben, und/oder einem System 18 wie oben beschrieben, gezeigt.

In einem ersten Schritt S1 erfolgt ein Empfangen von Fahrerdaten umfassend Bediendaten und Sensordaten mit Informationen zu einem Verhalten des Fahrers während der Fahrt. In einem zweiten Schritt S2 wird ein Ablenkungsgrad 62 des Fahrers basierend auf den Fahrerdaten ermittelt. Daraufhin erfolgt in einem dritten Schritt S3 ein Übermitteln eines Steuerbefehls an eine Ausgabeeinheit 20, der eine Ausgabe eines Hinweises 68 an den Fahrer bewirkt, wenn ein ermittelter Ablenkungsgrad 62 größer ist als ein vordefinierter Schwellenwert 64, um den Fahrer auf einen erhöhten Ablenkungsgrad 62 hinzuweisen. Hierbei kann, basierend auf einem vordefinierten Verhalten des Fahrers während der Fahrt eine Zunahme und/oder Abnahme des Ablenkungsgrades 62 ermittelt werden.

Die Erfindung wurde ausführlich beschrieben. Es versteht sich, dass die einzelnen Merkmale nicht nur wie in den Ausführungsbeispielen beschrieben sondern auch anderweitig miteinander kombiniert werden können. Ferner erkennt ein Fachmann, dass die offenbarte Lehre ohne Weiteres in Bereiche übertragen werden kann, in denen Maschinen durch Bedieneingaben geführt beziehungsweise bedient werden.

### Bezugszeichenliste

- 10: Vorrichtung
- 12: Eingangsschnittstelle
- 14: Analyseeinheit
- 16: Ausgangsschnittstelle
- 18: System
- 20: Ausgabeeinheit
- 22: Vorrichtungen zur primären Fahrzeugführung
- 24: Lenkrad
- 26: Lenkwinkelsensor
- 28: Kamera
- 30: Kraftfahrzeug
- 32: Pedalerie
- 34: Schalteinheit
- 36: Bedieneinheit zum Spiegelverstellen
- 38: Bedieneinheit für einen elektrischen Fensterheber
- 40: Bedieneinheit eines Mitteldisplays
- 42: Bedieneinheit eines Kombiinstruments
- 44: Schaubild
- 46: Schaubild
- 48: Schaubild
- 50: Kreis
- 52: Y-Achse
- 54: Totzeit
- 56: Y-Achse
- 58: Haltezeit
- 60: Y-Achse
- 62: Ablenkungsgrad
- 64: Schwellenwert
- 65: Maximalwert
- 66: neutraler Aufmerksamkeitsgrad
- 68: Hinweis
- S1 bis S3: Verfahrensschritte

## Patentansprüche

1. Vorrichtung (10) zur Schätzung eines Ablenkungsgrades (62) eines Fahrers bei einer Fahrt in einem Kraftfahrzeug (30), mit:
- einer Eingangsschnittstelle (12) zum Empfangen von Fahrerdaten umfassend Bediendaten und Sensordaten mit Informationen zu einem Verhalten des Fahrers während der Fahrt;
- einer Analyseeinheit (14) zum Ermitteln eines variablen Ablenkungsgrades (62) des Fahrers basierend auf den Fahrerdaten,
- einer Ausgangsschnittstelle (16) zum Übermitteln eines Steuerbefehls an eine Ausgabeeinheit (20), der eine Ausgabe eines Hinweises (68) an den Fahrer bewirkt, wenn die Analyseeinheit (14) einen Ablenkungsgrad (62) ermittelt, der größer ist als ein vordefinierter Schwellenwert (64), um den Fahrer auf einen erhöhten Ablenkungsgrad (62) hinzuweisen,
**dadurch gekennzeichnet, dass**
der Ablenkungsgrad (62) durch einen Index repräsentiert ist, der einen aktuellen Aufmerksamkeitszustand des Fahrers angibt und einen neutralen Aufmerksamkeitsgrad (66) als Referenzwert aufweist, wobei der Index sowohl Werte annehmen kann, die eine höhere Aufmerksamkeit als den neutralen Aufmerksamkeitsgrad (66) als auch Werte, die eine niedrigere Aufmerksamkeit als den neutralen Aufmerksamkeitsgrad (66) anzeigen, die Analyseeinheit (14) dazu ausgebildet ist, basierend auf einem vordefinierten Verhalten des Fahrers während der Fahrt eine Zunahme und basierend auf einem vordefinierten Verhalten des Fahrers während der Fahrt eine Abnahme des Ablenkungsgrades (62) zu ermitteln und den Index entsprechend anzupassen, und dass die Analyseeinheit (14) dazu ausgebildet ist, den Index gemäß einem Gradienten stetig zu dem neutralen Aufmerksamkeitsgrad (66) abzubauen, wenn über eine parametrisierbare Zeit kein vordefiniertes Verhalten des Fahrers erkannt wird, das eine Zunahme oder eine Abnahme des Ablenkungsgrades (62) des Fahrers anzeigt.

2. Vorrichtung (10) nach Anspruch 1, **dadurch gekennzeichnet, dass** die Bediendaten Informationen bezüglich einem Aktivieren einer Bedienvorrichtung im Bereich eines Fahrerarbeitsplatzes, insbesondere einer Bedieneinheit eines Mitteldisplays (40) und/oder einer Mittelkonsole, einer Bedieneinheit eines Multifunktionslenkrads, einer Bedieneinheit zum Spiegelverstellen (36), einer Bedieneinheit zum Sitzverstellen, einer Bedieneinheit eines elektrischen Fensterhebers (38), einer Bedieneinheit zur Verstellung des Innenraumlichtes und/oder einer Bedieneinheit zur Verstellung des Dachfensters umfassen.

3. Vorrichtung (10) nach einem der vorstehenden Ansprüche, **dadurch gekennzeichnet, dass** die Bediendaten Informationen bezüglich einem Bedienen von Vorrichtungen zur primären Fahrzeugführung (22), insbesondere einer Pedalerie (32) und/oder einer Lenkradstellung umfassen; und/oder die Sensordaten Informationen zu einem Fahrverhalten des Kraftfahrzeugs (30), insbesondere einem Beschleunigungsverhalten des Kraftfahrzeugs (30), und/oder Informationen bezüglich des Fahrers, insbesondere eine Fahrerbeobachtung durch eine Kamera (28), umfassen.

4. Vorrichtung (10) nach einem der vorstehenden Ansprüche, **dadurch gekennzeichnet, dass** die Analyseeinheit (14) dazu ausgebildet ist, basierend auf einer Datenfusion der Bediendaten und Sensordaten einen Warnzeitpunkt zu ermitteln, wobei der Steuerbefehl eine Ausgabe des Hinweises (68) an den Fahrer zum Warnzeitpunkt bewirkt.

5. Vorrichtung (10) nach einem der vorstehenden Ansprüche, **dadurch gekennzeichnet, dass** die Analyseeinheit (14) dazu ausgebildet ist, einer Bedieneingabe und/oder einer Fahrerhandlung des Fahrers eine, vorzugsweise gewichtete, erwartete Fahrerablenkung zuzuordnen, wobei insbesondere die Analyseeinheit (14) dazu ausgebildet ist, jeder Fahrerablenkung parametrisierbar ein Aufmerksamkeitspotential zuzuordnen, um eine Auswirkung der Fahrerablenkung auf den Ablenkungsgrad (62) des Fahrers zu bestimmen.

6. Vorrichtung (10) nach einem der vorstehenden Ansprüche, **dadurch gekennzeichnet, dass** die Analyseeinheit (14) dazu ausgebildet ist, einer Fahrerablenkung eine Haltezeit (58) zuzuordnen, die der Ablenkungsdauer des Fahrers durch und/oder in Folge einer Bedieneingabe und/oder einer Fahrerhandlung entspricht.

7. Vorrichtung (10) nach einem der vorstehenden Ansprüche, **dadurch gekennzeichnet, dass** die Analyseeinheit (14) dazu ausgebildet ist, einer Mehrzahl von gleichbleibenden Bedieneingaben und/oder Fahrerhandlungen innerhalb einer vordefinierten Totzeit (54) die erwartete Fahrerablenkung einer einzigen Bedieneingabe und/oder Fahrerhandlung zuzuordnen.

8. System (18) zur Schätzung eines Ablenkungsgrades (62) eines Fahrers bei einer Fahrt in einem Kraftfahrzeug (30), mit:
einer Vorrichtung (10) nach einem der vorstehenden Ansprüche; und
einer Ausgabeeinheit (20) zum Ausgeben eines Hinweises (68) an den Fahrer, wenn die Analyseeinheit (14) einen Ablenkungsgrad (62) ermittelt, der größer ist als ein vordefinierter Schwellenwert (64), um den Fahrer auf einen erhöhten Ablenkungsgrad (62) hinzuweisen.

9. Verfahren zur Schätzung eines Ablenkungsgrades (62) eines Fahrers bei einer Fahrt in einem Kraftfahrzeug (30), vorzugsweise mittels einer Vorrichtung (10) nach einem der Ansprüche 1 bis 7 und/oder einem System (18) nach Anspruch 8, umfassend die Schritte:
- Empfangen (S1) von Fahrerdaten umfassend Bediendaten und Sensordaten mit Informationen zu einem Verhalten des Fahrers während der Fahrt;
- Ermitteln (S2) eines Ablenkungsgrades (62) des Fahrers basierend auf den Fahrerdaten,
- Übermitteln (S3) eines Steuerbefehls an eine Ausgabeeinheit (20), der eine Ausgabe eines Hinweises (68) an den Fahrer bewirkt, wenn ein ermittelter Ablenkungsgrad (62) größer ist als ein vordefinierter Schwellenwert (64), um den Fahrer auf einen erhöhten Ablenkungsgrad (62) hinzuweisen,
**dadurch gekennzeichnet, dass**
der Ablenkungsgrad (62) durch einen Index repräsentiert wird, der einen aktuellen Aufmerksamkeitszustand des Fahrers angibt und einen neutralen Aufmerksamkeitsgrad (66) als Referenzwert aufweist, wobei der Index sowohl Werte annehmen kann, die eine höhere Aufmerksamkeit als den neutralen Aufmerksamkeitsgrad (66), als auch Werte, die eine niedrigere Aufmerksamkeit als den neutralen Aufmerksamkeitsgrad (66) anzeigen, basierend auf einem vordefinierten Verhalten des Fahrers während der Fahrt eine Zunahme und basierend auf einem vordefinierten Verhalten des Fahrers während der Fahrt eine Abnahme des Ablenkungsgrades (62) ermittelt und der Index entsprechend angepasst wird, und der Index gemäß einem Gradienten stetig zu dem neutralen Aufmerksamkeitsgrad (66) abgebaut wird, wenn über eine parametrisierbare Zeit kein vordefiniertes Verhalten des Fahrers erkannt wird, das eine Zunahme oder eine Abnahme des Ablenkungsgrades (62) des Fahrers anzeigt.

10. Computer-Programm mit Programm-Code-Mitteln, um alle Schritte eines Verfahrens nach dem vorstehenden Anspruch 9 durchzuführen, wenn das Computer-Programm auf einem Computer oder einer entsprechenden Recheneinheit ausgeführt wird.

## Claims

1. Device (10) for estimating the degree of distraction (62) of a driver during a journey in a motor vehicle (30), comprising:
- an input interface (12) for receiving driver data including operating data and sensor data containing information regarding the behavior of the driver during the journey;
- an analysis unit (14) for determining a variable degree of distraction (62) of the driver based on driver data,
- an output interface (16) for transmitting a control command to an output unit (20), which command causes an alert (68) to be output to the driver when the analysis unit (14) detects a degree of distraction (62) that is greater than a predefined threshold value (64) in order to alert the driver to an increased degree of distraction (62),
**characterized in that**
the degree of distraction (62) is represented by an index that indicates the current state of attention of the driver and has a neutral degree of attention (66) as a reference value, it being possible for the index to take on values which indicate a higher level of attention than the neutral degree of attention (66), as well as values which indicate a lower level of attention than the neutral degree of attention (66), the analysis unit (14) being designed to detect, based on a predefined behavior of the driver during the journey, an increase and, based on a predefined behavior of the driver during the journey, a decrease in the degree of distraction (62) and to adjust the index accordingly, and **in that** the analysis unit (14) is designed to continuously reduce the index according to a gradient to the neutral degree of attention (66) when no predefined behavior of the driver which indicates an increase or decrease in the degree of distraction (62) is identified over a parameterizable time.

2. Device (10) according to claim 1, **characterized in that** the operating data comprise information regarding the activation of an operator control apparatus in the region of a driver task area, in particular an operating unit of a central display (40) and/or a center console, an operating unit of a multifunction steering wheel, an operating unit for adjusting mirrors (36), an operating unit for adjusting seats, an operating unit for an electric window lifter (38), an operating unit for adjusting the interior light and/or an operating unit for adjusting the roof window.

3. Device (10) according to any of the preceding claims,
**characterized in that** the operating data comprise information relating to the operation of devices for primary vehicle control (22), in particular a pedal assembly (32) and/or a steering wheel position; and/or the sensor data comprise information relating to a driving behavior of the motor vehicle (30), in particular an acceleration behavior of the motor vehicle (30), and/or information relating to the driver, in particular observation of the driver by a camera (28).

4. Device (10) according to any of the preceding claims,
**characterized in that** the analysis unit (14) is designed to determine a warning time based on data fusion of the operating data and sensor data, the control command causing an alert (68) to be output to the driver at the warning time.

5. Device (10) according to any of the preceding claims,
**characterized in that** the analysis unit (14) is designed to assign an expected, preferably weighted, driver distraction to an operating input and/or a driver action of the driver, in particular the analysis unit (14) being designed to parameterizably assign an attention level potential to each driver distraction in order to determine an effect of the driver distraction on the degree of distraction (62) of the driver.

6. Device (10) according to any of the preceding claims,
**characterized in that** the analysis unit (14) is designed to assign a hold time (58) to a driver distraction, which hold time corresponds to the duration of the distraction of the driver caused by and/or as a result of an operating input and/or a driver action.

7. Device (10) according to any of the preceding claims,
**characterized in that** the analysis unit (14) is designed to assign the expected driver distraction of a single operating input and/or driver action to a plurality of consistent operating inputs and/or driver actions within a predefined downtime (54).

8. System (18) for estimating the degree of distraction (62) of a driver during a journey in a motor vehicle (30), comprising:
a device (10) according to any of the preceding claims; and
an output unit (20) for outputting an alert (68) to the driver when the analysis unit (14) detects a degree of distraction (62) that is greater than a predefined threshold value (64) in order to alert the driver to an increased degree of distraction (62).

9. Method for estimating the degree of distraction (62) of a driver during a journey in a motor vehicle (30), preferably by means of a device (10) according to any of claims 1 to 7 and/or a system (18) according to claim 8, comprising the steps of:
- receiving (S1) driver data comprising operating data and sensor data comprising information regarding the behavior of the driver during the journey;
- determining (S2) a degree of distraction (62) of the driver based on the driver data,
- transmitting (S3) a control command to an output unit (20) which causes an alert (68) to be output to the driver when a determined degree of distraction (62) is greater than a predefined threshold value (64) in order to alert the driver to an increased degree of distraction (62),
**characterized in that**
the degree of distraction (62) is represented by an index which indicates the current state of attention of the driver and has a neutral degree of attention (66) as a reference value, it being possible for the index to take on values which indicate a higher level of attention than the neutral degree of attention (66), as well as values which indicate a lower level of attention than the neutral degree of attention (66), based on a predefined behavior of the driver during the journey, an increase and, based on a predefined behavior of the driver during the journey, a decrease in the degree of distraction (62) is detected and the index is adjusted accordingly, and the index is continuously reduced according to a gradient to the neutral degree of attention (66) when no predefined behavior of the driver which indicates an increase or decrease in the degree of distraction (62) of the driver is identified over a parameterizable time.

10. Computer program having program code means for carrying out all steps of a method according to the preceding claim 9 when the computer program is executed on a computer or a corresponding computing unit.

## Revendications

1. Dispositif (10) pour l'estimation d'un degré de distraction (62) d'un conducteur lors d'un trajet dans un véhicule automobile (30), comportant :
- une interface d'entrée (12) pour la réception de données de conducteur comprenant des données de manipulation et des données de capteur comportant des informations sur un comportement du conducteur pendant le trajet ;
- une unité d'analyse (14) pour la détermination d'un degré de distraction (62) variable du conducteur sur la base des données de conducteur,
- une interface de sortie (16) pour la transmission d'un ordre de commande à une unité de sortie (20), lequel ordre de commande provoque une sortie d'une indication (68) au conducteur lorsque l'unité d'analyse (14) détermine un degré de distraction (62) qui est supérieur à une valeur seuil prédéfinie (64) pour indiquer au conducteur un degré de distraction (62) accru, **caractérisé en ce que**
le degré de distraction (62) est représenté par un indice qui spécifie un état d'attention actuel du conducteur et présente un degré d'attention neutre (66) comme valeur de référence, dans lequel l'indice peut prendre aussi bien des valeurs qui affichent une attention plus élevée que le degré d'attention neutre (66) que des valeurs qui affichent une attention plus faible que le degré d'attention neutre (66), l'unité d'analyse (14) est configurée pour déterminer, sur la base d'un comportement prédéfini du conducteur pendant le trajet, une augmentation et, sur la base d'un comportement prédéfini du conducteur pendant le trajet, une diminution du degré de distraction (62), et pour adapter l'indice en conséquence, et **en ce que** l'unité d'analyse (14) est configurée pour diminuer l'indice conformément à un gradient de manière continue vers le degré d'attention neutre (66) si aucun comportement prédéfini du conducteur qui affiche une augmentation ou une diminution du degré de distraction (62) du conducteur n'est reconnu sur une durée paramétrable.

2. Dispositif (10) selon la revendication 1, **caractérisé en ce que** les données de manipulation comprennent des informations concernant une activation d'un dispositif de manipulation dans la zone d'un poste de travail de conducteur, en particulier d'une unité de manipulation d'un écran central (40) et/ou d'une console centrale, d'une unité de manipulation d'un volant multifonction, d'une unité de manipulation pour le réglage des rétroviseurs (36), d'une unité de manipulation pour le réglage du siège, d'une unité de manipulation d'un lève-vitre électrique (38), d'une unité de manipulation pour le réglage de l'éclairage intérieur et/ou d'une unité de manipulation pour le réglage de la fenêtre de toit.

3. Dispositif (10) selon l'une des revendications précédentes,
**caractérisé en ce que** les données de manipulation comprennent des informations concernant une manipulation de dispositifs pour le guidage primaire du véhicule (22), en particulier un pédalier (32) et/ou une position de volant ; et/ou les données de capteur comprennent des informations sur un comportement de conduite du véhicule automobile (30), en particulier un comportement d'accélération du véhicule automobile (30), et/ou des informations concernant le conducteur, en particulier une observation de conducteur par une caméra (28).

4. Dispositif (10) selon l'une des revendications précédentes,
**caractérisé en ce que** l'unité d'analyse (14) est configurée pour déterminer un moment d'avertissement sur la base d'une fusion de données des données de manipulation et des données de capteur, dans lequel l'ordre de commande provoque une sortie de l'indication (68) au conducteur au moment d'avertissement.

5. Dispositif (10) selon l'une des revendications précédentes,
**caractérisé en ce que** l'unité d'analyse (14) est configurée pour associer à une entrée de manipulation et/ou à une action de conducteur du conducteur une distraction de conducteur attendue, de préférence pondérée, dans lequel l'unité d'analyse (14) est en particulier configurée pour associer de manière paramétrable un potentiel d'attention à chaque distraction de conducteur, afin de déterminer un effet de la distraction de conducteur sur le degré de distraction (62) du conducteur.

6. Dispositif (10) selon l'une des revendications précédentes,
**caractérisé en ce que** l'unité d'analyse (14) est configurée pour associer à une distraction de conducteur un temps de maintien (58) qui correspond à la durée de distraction du conducteur par une entrée de manipulation et/ou une action de conducteur et/ou à la suite de celles-ci.

7. Dispositif (10) selon l'une des revendications précédentes,
**caractérisé en ce que** l'unité d'analyse (14) est configurée pour associer à une pluralité d'entrées de manipulation et/ou d'actions de conducteur constantes au cours d'un temps mort prédéfini (54) la distraction de conducteur attendue d'une seule entrée de manipulation et/ou action de conducteur.

8. Système (18) pour l'estimation d'un degré de distraction (62) d'un conducteur lors d'un trajet dans un véhicule automobile (30), comportant :
un dispositif (10) selon l'une des revendications précédentes ; et
une unité de sortie (20) pour la sortie d'une indication (68) au conducteur lorsque l'unité d'analyse (14) détermine un degré de distraction (62) qui est supérieur à une valeur seuil prédéfinie (64), afin d'indiquer au conducteur un degré de distraction (62) accru.

9. Procédé pour l'estimation d'un degré de distraction (62) d'un conducteur lors d'un trajet dans un véhicule automobile (30), de préférence par le biais d'un dispositif (10) selon l'une des revendications 1 à 7 et/ou d'un système (18) selon la revendication 8, comprenant les étapes consistant à :
- recevoir (S1) des données de conducteur comprenant des données de manipulation et des données de capteur comportant des informations sur un comportement du conducteur pendant le trajet ;
- déterminer (S2) un degré de distraction (62) du conducteur sur la base des données de conducteur,
- transmettre (S3) un ordre de commande à une unité de sortie (20), lequel ordre de commande provoque la sortie d'une indication (68) au conducteur lorsqu'un degré de distraction (62) déterminé est supérieur à une valeur seuil prédéfinie (64), afin d'indiquer au conducteur un degré de distraction (62) accru,
**caractérisé en ce que**
le degré de distraction (62) est représenté par un indice qui spécifie un état d'attention actuel du conducteur et présente un degré d'attention neutre (66) comme valeur de référence, dans lequel l'indice peut prendre aussi bien des valeurs qui affichent une attention plus élevée que le degré d'attention neutre (66) que des valeurs qui affichent une attention plus faible que le degré d'attention neutre (66), sur la base d'un comportement prédéfini du conducteur pendant le trajet, une augmentation et, sur la base d'un comportement prédéfini du conducteur pendant le trajet, une diminution du degré de distraction (62) sont déterminées et l'indice est adapté en conséquence, et l'indice est diminué conformément à un gradient de manière continue vers le degré d'attention neutre (66) si aucun comportement prédéfini du conducteur qui affiche une augmentation ou une diminution du degré de distraction (62) du conducteur n'est reconnu sur une durée paramétrable.

10. Programme informatique comportant des moyens de code de programme afin de mettre en œuvre toutes les étapes d'un procédé selon la revendication 9 précédente lorsque le programme informatique est exécuté sur un ordinateur ou sur une unité de calcul correspondante.
